# EUROPÄISCHE PATENTSCHRIFT

(11) **EP 3 035 634 B1**
(45) Veröffentlichungstag und Bekanntmachung des Hinweises auf die Patenterteilung: **20.05.2020**
(21) Anmeldenummer: 15197273.4
(22) Anmeldetag: 01.12.2015
(51) Int. Cl.: H04L 29/06

(54) **TELEKOMMUNIKATIONSANORDNUNG UND VERFAHREN ZUM HERSTELLEN EINER RTC-VERBINDUNG ZWISCHEN EINEM ERSTEN ENDPUNKT UND EINEM ZWEITEN ENDPUNKT**
TELECOMMUNICATION ARRANGEMENT AND METHOD FOR ESTABLISHING A RTC CONNECTION BETWEEN A FIRST AND A SECOND ENDPOINT
SYSTÈME ET PROCÉDÉ DE TELECOMMUNICATION POUR L'ÉTABLISSEMENT D'UNE CONNECTION RTC ENTRE UN PREMIER POINT TERMINAL ET UN SECOND POINT TERMINAL

(30) Priorität: 16.12.2014 DE 102014018873
(43) Veröffentlichungstag der Anmeldung: 22.06.2016
(73) Patentinhaber: Unify GmbH & Co. KG, 81739 München (DE)
(72) Erfinder: Tietsch, Michael, 86916 Kaufering (DE); Klaghofer, Karl, 81373 München (DE)
(74) Vertreter: Fritzsche, Thomas

(56) Entgegenhaltungen:
- WO-A1-2013/043308
- US-A1- 2014 006 604
- US-A1- 2014 136 718
- US-B2- 8 848 543
- J Rosenberg: "Interactive Connectivity Establishment (ICE): A Protocol for Network Address Translator (NAT) Traversal for Offer/Answer Protocols' IETF RFC 5245", , 1. April 2010 (2010-04-01), XP055154341, Gefunden im Internet: URL:http://tools.ietf.org/pdf/rfc5245.pdf [gefunden am 2014-11-21]

## Beschreibung

Die vorliegende Erfindung betrifft ein Verfahren zum Herstellen einer RTC-Verbindung zwischen einem ersten Endpunkt und einem zweiten Endpunkt gemäß dem Oberbegriff des Anspruchs 1 sowie eine entsprechende Telekommunikationsanordnung gemäß Anspruch 9.

Eine typische Telekommunikationsanordnung basiert - bzgl. Realtime-Communication bzw. RTC - auf einer von der IETF (Internet Engineering Taskforce) und W3C (World Wide Web Consortium) unter den Namen RTCWeb bzw. WebRTC (nachfolgend wird der Begriff "WebRTC" synonym für beide Bezeichnungen verwendet.) bzw. verallgemeinernd unter dem Namen RTC standardisierten Multimedia-Technologie, bei der eine ganze Reihe von ebenfalls standardisierten Protokollen zum Einsatz kommt. Das dabei zur Ermittlung der optimalen RTC-Payload-Verbindung eingesetzte Verfahren ICE (Interactive Connectivity Establishment, RFC 5245) bedient sich seinerseits des Protokolls STUN (Session Traversal Utilities) for NAT (Network Address Translation, RFC 5389), um sogenannte "Connectivity-Checks" durchzuführen. Diese Checks ermitteln, ob die untersuchte Route prinzipiell für die gewünschte Payload-Verbindung verwendbar wäre.

In VolP (Voice-over-Internet-Protocol) sollen die Endpunkte einer Realtime-Verbindung (RTP/RTCP) möglichst direkt, also ohne zwischengeschaltete Server, miteinander verbunden werden. Die Knappheit der IPv4-Adressen hat jedoch dazu geführt, dass in vielen Fällen NAT oder NAPT (Network Address & Port Translation) zwischen Intranet und Internet eingesetzt wird. Eine direkte Kontaktaufnahme vom Internet zu einem Intranet-Endpunkt ist hierdurch ohne besondere Maßnahmen unmöglich. Hier setzt ICE (Interactive Connectivity Establishment) an, das im Beispiel VolP zusammen mit dem Signalisierungsprotokoll SIP und den Protokollen STUN und TURN (eine STUN-Erweiterung) arbeitet. Da ICE keine Voreinstellungen über mögliche Verbindungen benötigt, werden im laufenden Betrieb alle Verbindungskandidaten von den Endpunkten zunächst ermittelt und danach einfach ausprobiert (geht/geht nicht, der STUN-basierte "Connectivity Check"). Diese Checks werden gemäß einer Checkliste abgearbeitet. Die Liste wiederum enthält alle Kandidaten sortiert nach ihrer Priorität (von der vermeintlich besten Verbindung an oberster Stelle bis zur vermeintlich ungünstigsten z.B. via TURN-Server am Schluss). Der Algorithmus zur Vergabe der Prioritäten ist im ICE-RFC beschrieben, enthält aber nur feste Regeln, die keinen Bezug z.B. zur aktuellen Netzlast oder gar Netzstörungen haben.

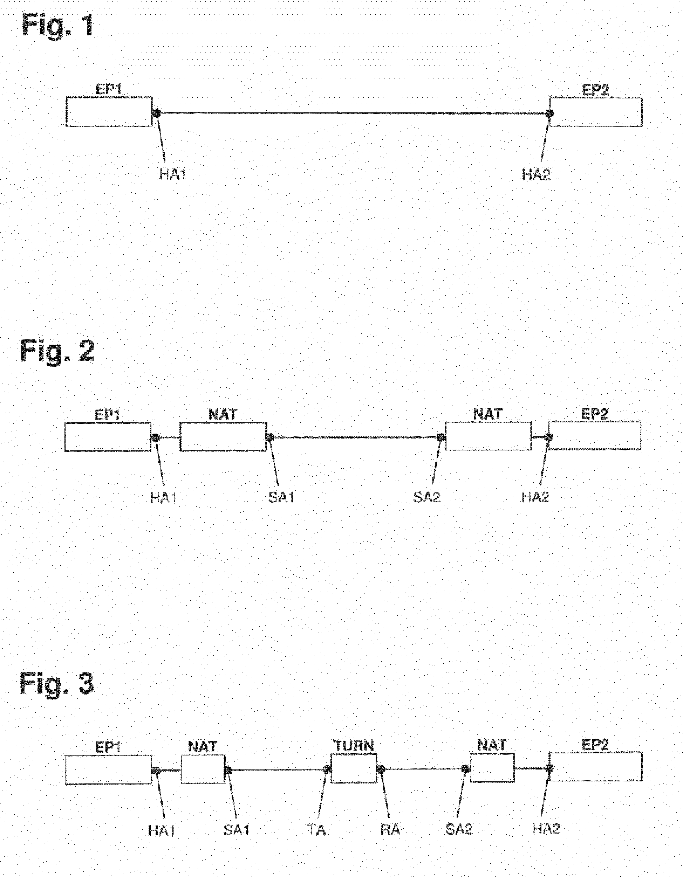

Da das Verständnis der verschiedenen im Standard beschriebenen Szenarien im weiteren Verlauf von Bedeutung ist, werden diese Szenarien nachfolgend kurz skizziert. Die Connectivity-Checks werden gemäß Standard auch in genau dieser (Prioritäts-) Reihenfolge abgearbeitet (von oben nach unten), wie es in den Fig. 1 - 3 dargestellt ist:
- Fig. 1:: Direkte Host-Host-Verbindung
- Fig. 2:: Über NAT geführte Verbindung
- Fig. 3:: Verbindung mit Hilfe eines TURN-Relay-Servers

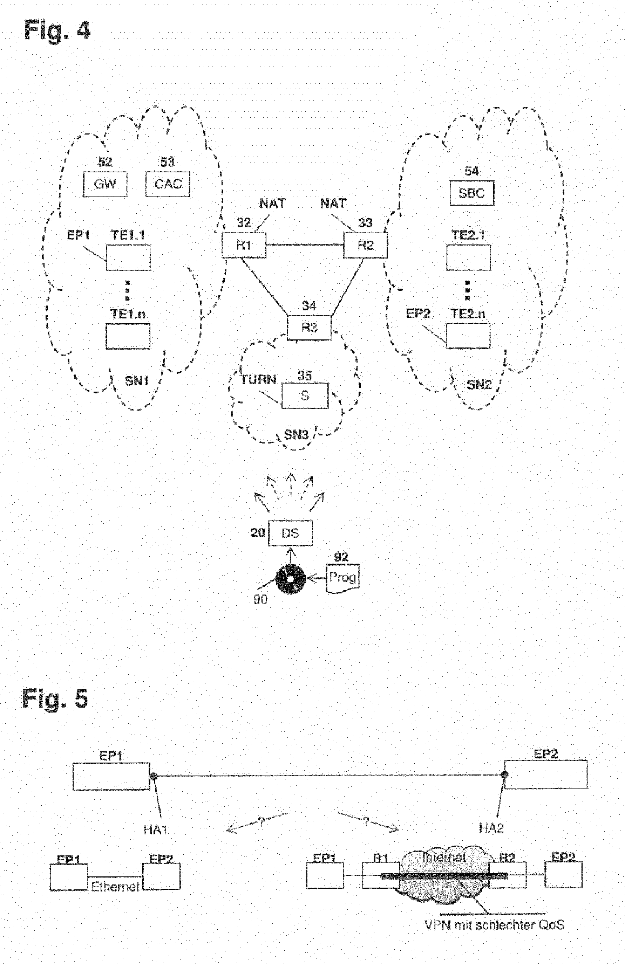

Nun stellt sich zunächst die Frage, warum es möglich sein sollte, dass eine direkte Host-Host-Verbindung (vgl. Fig. 1) qualitativ schlechter ist als eine der anderen beiden Verbindungen. Die Antwort liegt darin, dass die oben gezeigten Szenarien nur den logischen Aufbau zeigen, aber nicht auf die physischen Eigenschaften eingehen. Fig. 5 (Logische Netzwerksicht oben und zwei physische Ausprägungen darunter) demonstriert das eindrucksvoll; obwohl es sich logisch um dieselbe Konfiguration handelt, wird sich die Qualität der über die beiden VPN-Router (R1, R2) geführten Verbindung signifikant von der links dargestellten Direktverbindung (über Ethernet) unterscheiden: Die Verbindung über die beiden VPN-Router hat in der Regel deutlich schlechtere Dienstgüte- bzw. QoS-Werte.

Sinngemäß kann ein VPN in allen Szenarien auftreten, ohne dass es dem Verfahren ICE bekannt wäre. Es lohnt sich also zur Sicherheit immer, QoS bei der Prioritätsvergabe zu berücksichtigen.

Bisher wird jedoch in beschriebener Weise nur anhand weniger vordefinierter Kriterien entschieden, welche Route letztlich für die Payload (d.h. die Nutzdaten) ausgewählt wird. Gerade die im Umfeld RTC (Real Time Communication) wichtigen QoS-Aspekte (Quality of Service, oft auch Dienstgüte genannt) bleiben unberücksichtigt.

Bei STUN wird bisher nur ein "geht/geht nicht"-Test durchgeführt ("Connectivity-Check", d.h. eine Testmeldung schafft entweder einen kompletten Umlauf vom Sender zum STUN-Server und wieder zurück ... oder eben nicht). Insbesondere die für Echtzeitanwendungen wichtigen QoS-Aspekte werden nicht betrachtet. Zwar werden in ICE den verschiedenen Alternativen (sog. Kandidaten) Prioritäten beigegeben, die zur Qualitätsverbesserung (und ggf. Kostenreduzierung) beitragen sollen, aber strenggenommen auf Annahmen oder Vorgaben beruhen, wie die nachfolgenden Beispiele von Priorisierungsgründen zeigen:
- IPv6 vor IPv4, d.h. strategische Vorgabe
- Direkte Verbindung (ohne Adressumsetzung) vor NAT; das ist IP-technisch OK, lässt aber keine QoS-Aussage zu
- NAT vor TURN (Relais); TURN-Server sind potenzielle Bandbreiten-Engpässe und damit ist die Annahme nachvollziehbar, aber belastbare QoS-Aussagen sind auch damit nicht möglich.

Die erwähnten STUN-Connectivity-Checks werden in der durch die vorstehende Priorisierung festgelegten Reihenfolge durchgeführt. Die Priorisierung selbst wird aber weder durch STUN noch durch andere QoS-relevanten Kriterien beeinflusst.

Zusammenfassend ist festzuhalten: Die Standard-IETF-ICE-Prozeduren, z.B. für WebRTC- oder SIP-Systeme, prüfen nur die grundsätzliche Konnektivität ("STUN Connectivity Checks") der angebotenen RTC-Payload-Kandidatenadresspaare der (ICE-)Kommunikationsendpunkte (Clients, Applikationsserver). Eine Funktionalität zum Berücksichtigen der QoS-Eigenschaften der verschiedenen Kandidaten-Payload-Pfade fehlt jedoch.

Die WO 2013/043308 A1 offenbart ein System und ein Verfahren, womit der Übertragungsweg für während eines VolP-Telefongesprächs übertragene Telefondatenpakete basierend auf einem Test der Übertragungsqualität von potentiellen Übertragungswegen unmittelbar vor dem Aufsetzten des Gesprächs ausgewählt wird. Der Übertragungsweg mit der besten Übertragungsqualität wird zunächst ausgewählt. Steigt die Übertragungsqualität eines anderen Übertragungsweges über den des zuerst ausgewählten Übertragungsweges, wird stattdessen der Übertragungsweg mit der besten Übertragungsqualität für das Gespräch verwendet.

Die US 2014/0136718 A1 offenbart, während des Auffindens von potentiellen Übertragungswegen zwischen zwei Endgeräten gleichzeitig die Übertragungsqualität zu bestimmen und hierauf die Übertragungsqualität bei der Priorisierung der Übertragungswege zu berücksichtigen.

Die US 8 484 543 B2 offenbart ein System und ein Verfahren, womit eingehende Rufe von einem ersten Kommunikationsteilnehmer an einen zweiten Kommunikationsteilnehmer basierend auf Informationen bezüglich der Übertragungsqualität automatisch gesteuert werden können. Hierzu empfängt der zweite Kommunikationsteilnehmer die Informationen bezüglich der Übertragungsqualität, wählt darauf basierend einen Übertragungsweg aus und übermittelt dem ersten Kommunikationsteilnehmer Informationen bezüglich des Übertragungswegs. Das Verfahren kann zusammen mit dem ICE-Standard verwendet werden.

Die US 2014/0006604 A1 offenbart, dass eine STUN-Nachricht an einem Router-Gerät in einem Netzwerk von einem Client-Gerät im Netzwerk entlang eines Netzwerkpfads empfangen wird. Die STUN-Nachricht wird nach Informationen ausgewertet, die das Router-Gerät anweisen, Medien zu ändern, die anschließend über den Netzwerkpfad gesendet werden. Wenn die Auswertung angibt, dass das Router-Gerät die Medien ändern soll, werden die Medien entsprechend den Informationen in der STUN-Nachricht geändert, die die Attribute des Netzwerks angeben.

Der Erfindung liegt die Aufgabe zugrunde, die eingangs genannten Nachteile beim Herstellen einer RTC-Verbindung zu beseitigen und RTC-Verbindungen künftig effizienter herzustellen.

Diese Aufgabe wird gelöst mit einem Verfahren gemäß Anspruch 1, einem Computerprogrammprodukt gemäß Anspruch 7, einem maschinenlesbaren Datenträger mit darauf gespeichertem Computerprogrammprodukt gemäß Anspruch 8 sowie mit einer Telekommunikationsanordnung gemäß Anspruch 9.

Erfindungsgemäß wird bei dem (computerimplementierten) Verfahren zum Herstellen einer RTC-Verbindung zwischen einem ersten Endpunkt und einem zweiten Endpunkt in einem IP-Netz, bei dem die bekannten STUN-Connectivity-Check-Prozeduren eines ICE-Verfahrens verwendet werden, in folgender Weise vorgegangen: Zunächst wird eine Liste von möglichen Verbindungswegen - bzw. sogar aller möglichen Verbindungswege - zwischen dem ersten Endpunkt und dem zweiten Endpunkt erstellt. Dann wird für jeden der auf der Liste befindlichen möglichen Verbindungswege (auch als Kandidaten bezeichnet) eine jeweilige Priorität festgelegt, die angibt, in welcher Reihenfolge bei den nacheinander auszuführenden Connectivity-Checks des STUN-Verfahrens probiert werden soll, ob sich über den betreffenden Verbindungsweg eine Verbindung zwischen dem ersten Endpunkt und dem zweiten Endpunkt aufbauen lässt. Danach wird gemäß der festgelegten Priorität die RTC-Verbindung zwischen dem ersten Endpunkt und dem zweiten Endpunkt hergestellt, wobei so vorgegangen wird, dass zunächst der Versuch unternommen wird, die RTC-Verbindung unter Verwendung des prioritätsbesten Verbindungswegs herzustellen. Gelingt dies, sind keine weiteren Schritte erforderlich. Gelingt dies aber aus irgendwelchen Gründen nicht, wird anschließend versucht, die RTC-Verbindung mit demjenigen Verbindungsweg herzustellen, der die nächstbeste Priorität aufweist. Diese Versuche werden so lange entsprechend der ermittelten bzw. festgelegten Reihenfolge der Prioritäten unternommen, bis schließlich eine RTC-Verbindung hergestellt ist.
Die Erfindung zeichnet sich dadurch aus, dass für die Festlegung der jeweiligen Priorität nicht nur die bisher bereits bekannten Kriterien verwendet werden, sondern dass zusätzlich für jeden möglichen Verbindungsweg dessen jeweiliger Dienstgüte-Wert ermittelt wird und in die Festlegung der Priorität dieses Verbindungswegs auf der betreffenden Liste eingeht.

Diese Vorgehensweise bewirkt, dass durch die Nutzung der vorhandenen Statistiken über die jeweilige Dienstgüte (auch als QoS bezeichnet), die für Echtzeitanwendungen mitunter kritische Dienstgüte- bzw. QoS-Werte berücksichtigt werden, was einen effizienteren Aufbau entsprechender Echtzeitverbindungen bzw. RTC-Verbindungen ermöglicht.

Durch Berücksichtigung von QoS in ICE-Prozeduren (STUN-Connectivity-Checks) wird erfindungsgemäß somit das voraussichtlich QoS-mäßig beste ICE-Adressenpaar zuerst getestet. Unnötige und zeitaufwändige STUN-Connectivity-Checks können dadurch vermieden werden, was zu kürzeren Real-Time-Verbindungsaufbauzeiten, weniger Netzbelastung und zur Selektion desjenigen ICE-Kandidatenpaares (Verbindungsweges) führt, welches die besten QoS-Eigenschaften (bezogen auf seine Alternativen) aufweist..

Gemäß einer vorteilhaften Weiterbildung des erfindungsgemäßen Verfahrens übermittelt der erste Endpunkt die Dienstgüte-Werte der möglichen Verbindungswege zwischen dem ersten Endpunkt und dem zweiten Endpunkt auch an andere Endpunkte, indem er STUN-Meldungen verwendet. Da hier der Ausdruck "erster Endpunkt" keine Einschränkung auf einen bestimmten Endpunkt darstellen soll, übermitteln somit alle Endpunkte Kenntnisse über Dienstgüte-Werte an die übrigen Endpunkte. In anderen Worten werden somit die QoS-Daten der jeweiligen möglichen Verbindungswege (auch als ICE-Kandidatenpaare bezeichnet) untereinander in STUN-Meldungen ausgetauscht. Dadurch wird in jedem Endpunkt die eigene QoS-Statistik mit den entsprechenden Informationen des jeweiligen Partners angereichert. Dadurch werden nicht nur die QoS-Daten bisheriger, "echter" Verbindungen in die aktuelle ICE-Kandidatenselektion eingehen, sondern auch die Ergebnisse der für den aktuell zu tätigenden Ruf (der auch als Call oder RTC-Verbindung bezeichnet werden kann) durchgeführten Connectivity-Checks. Die mittels STUN-Connectivity-Checks ausgetauschten QoS-Daten fließen somit zusätzlich auch in die QoS-Statistikdaten des ICE-Endpunktes ein und können für zukünftige RTC-Verbindungen bzw. Rufe berücksichtigt werden. Dies ist dann besonders vorteilhaft, wenn für das ICE-Kandidatenpaar noch keine QoS-Daten aus der Vergangenheit dem Endpunkt vorliegen.

Erfindungsgemäß werden Dienstgütewerte, die nur Netzinfrastrukturelementen (beispielsweise Router), jedoch nicht den Endpunkten bekannt sind, in STUN-Connectivity-Check-Nachrichten (typischerweise "Request" und "Response") eingefügt, um den Endpunkten Informationen mitzuteilen, die sie ansonsten (also ohne das erfindungsgemäße Verfahren) nicht zur Verfügung hätten. Dabei sind es vorzugsweise diese Netzinfrastrukturelemente selbst, weiche diese Einfügung vornehmen und damit mit ihrem eigenen QoS-Wissen anreichern. So kann beispielsweise ein Router seine vorhandene Information, dass die Router-Queue bzw. Router-Warteschlange für eine Payload- bzw. Nutzdatenverbindung vom Typ "Video" im Moment für diese Richtung eine Paketverlustquote (auch als Packet Loss Rate bezeichnet) von 15 % aufweist, was ein sogenanntes Traffic Shaping erfordert, in die STUN-Response-Nachricht einfügen. Dies kann an demjenigen Endpunkt, der den so genannten Controlling ICE-Client-Endpunkt darstellt und der die STUN-Response-Nachricht erhält, berücksichtigt werden, und zwar sowohl für die ICE-Kandidatenpaarauswahl, für die aufzubauende Video-Verbindung (auch als Videocall bezeichnet) als auch für die Aktualisierung bzw. das Update der QoS-Statistik im betreffenden Endpunkt für nachfolgende Rufe bzw. RTC-Verbindungen. Damit kann die Effizienz bei der Herstellung von ICE-Verbindungen noch weiter verbessert werden.

Es ist von Vorteil, Gruppen von Endpunkten zu definieren, von denen erwartet werden kann, dass ihre Verbindungen den gleichen Dienstgütewert aufweisen, wobei vorzugsweise jede Gruppe mit mindestens einem Subnetz der betreffenden Endpunkte oder einem Teil davon korrespondiert. In anderen Worten bedeutet dies, dass sich vorzugsweise alle Mitglieder einer Gruppe im gleichen Subnetz befinden. Dies ermöglicht die Vorteile, einerseits die Datenmenge zu reduzieren und andererseits Annahmen zur Dienstgüte der Ver-Mitglied in einer Gruppe mit Verbindung bekannter Dienstgüte sind. Falls die ermittelten Dienstgüte-Werte von Verbindungswegen zu verschiedenen Endpunkten innerhalb einer Gruppe unterschiedlich sind, werden diese Dienstgüte-Werte vorzugsweise gemittelt, wobei die aktuellen Werte stärker berücksichtigt bzw. gewichtet werden.

Gemäß einer Ausführungsform wird ein zentraler Punkt des IP-Netzes verwendet, um die ihm zur Verfügung stehenden Dienstgüte-Werte an den steuernden Endpunkt (auch als ICE-Controlling-Endpunkt bezeichnet) zu schicken. Da solche zentralen Punkte ein höheres Verkehrsaufkommen aufweisen, werden "bessere" QoS-Daten für die Prognosen erhalten. Als derartiger zentraler Punkt bietet sich beispielsweise ein Gateway, ein Session-Border-Controller oder ein Medienserver (beispielsweise eine Server-basierte Echtzeitanwendung) an.

Es ist von Vorteil, wenn die ermittelten Dienstgüte-Werte für die möglichen Verbindungswege bzw. Kandidatenpaare in einer zentralen Instanz (beispielsweise einer Call Admission Control = CAC) gespeichert und von allen Endpunkten dort abgefragt werden können. Das Nutzen derartiger zentraler Dienste bzw. Wissenselemente (beispielsweise QoS, Performance) bietet den Vorteil, dass die Performance-Anforderungen im Client bzw. Endpunkten niedrig gehalten werden können. Es ist klar, dass hierzu jedoch eine Schnittstelle zwischen dem ICE-Client und einer solchen zentralen QoS-Applikation erforderlich ist.

Auch ein Computerprogramm bzw. Computerprogrammprodukt zur Durchführung des vorgenannten Verfahrens sowie ein maschinenlesbarer Datenträger, auf dem ein solches Computerprogramm gespeichert ist, wird als zur vorliegenden Erfindung gehörig angesehen.

Die der Erfindung zugrunde liegende Aufgabe wird außerdem gelöst mit einer Telekommunikationsanordnung, die einen ersten Endpunkt, einen zweiten Endpunkt, (sowie üblicherweise viele weitere Endpunkte), und ein IP-Netz aufweist, über das die Endpunkte miteinander verbunden sind, wobei die Endpunkte so ausgebildet sind, dass sie zum Ausführen des beschriebenen erfindungsgemäßen Verfahrens geeignet sind.

Die Erfindung in ihren verschiedenen Aspekten lässt sich somit zusammengefasst folgendermaßen charakterisieren:
1. Erweiterung der-ICE Prozedur "STUN-Check":
   Zusätzlich zu den in den RFC5389 (STUN) definierten Parametern werden QoSbezogene Daten eingefügt und später bei der Priorisierung der Verbindungskandidaten berücksichtigt.
2. Erweiterung beider Endpunkte um die Fähigkeit, QoS-Statistikdaten aus früheren (oder auch aktuell existierenden) Verbindungen zu ermitteln und diese bestimmten Zielen (Zielgruppen) und ggf. Pfaden durch das IP-Netz zuordnen zu können. Zusätzlich verfügen sie über die Möglichkeit, Statistikdaten vom jeweils anderen Endpunkt zu "lernen".
3. Erweiterung des ersten Endpunkts derart, dass
   a. sein STUN-Client QoS-Statistikdaten in die STUN-Request-Meldung einfügen kann,
   b. der STUN-Client QoS-Daten der STUN-Antwortmeldung entnehmen kann, um damit seine eigenen Statistikdaten zu vervollständigen oder zu aktualisieren,
   c. die Priorisierung der Verbindungskandidaten und damit letztlich die Kandidatenauswahl abhängig von selbst ermittelten und den in b. empfangenen Daten (aus früheren Checks) beeinflusst werden kann.
4. Erweiterung des zweiten Endpunkts derart, dass
   a. sein STUN-Client QoS-Daten der STUN-Request-Meldung entnehmen kann, um damit seine eigenen Statistikdaten zu vervollständigen oder zu aktualisieren.
   b. sein STUN-Server seine QoS-Statistikdaten in die STUN-Antwortmeldung einfügen kann.
5. Optionale Erweiterung von Netzinfrastrukturelementen (z.B. Router) um die Fähigkeit, deren "QoS-Wissen" (z.B. über aktuelle Paketverluste (packet-loss & packetdrop) für beispielsweise die Verkehrsart Video (Video Router Queue) in STUN-Nachrichten einfügen zu können.

Es ist ersichtlich, dass bei der vorliegenden Erfindung das erfindungsgemäße Verfahren und die erfindungsgemäße Telekommunikationsanordnung in einem engen Zusammenhang zueinander stehen. Daher versteht es sich von selbst, dass Merkmale, die in Verbindung mit dem Verfahren beschrieben worden sind, auch bei der Telekommunikationsanordnung vorgesehen sein können bzw. zwingend erforderlich sind, und im umgekehrten Fall auch in Verbindung mit der Telekommunikationsanordnung beschriebene Merkmale und Besonderheiten auch bei dem Verfahren Anwendung finden, auch ohne dass dies ausdrücklich erwähnt werden müsste.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine beispielhafte Konfiguration, bei der zwei Endpunkte eine direkte Host-Host-Verbindung zueinander aufweisen,
- Fig. 2: eine andere beispielhafte Konfiguration, bei der zwei Endpunkte eine über NAT geführte Verbindung zueinander aufweisen,
- Fig. 3: eine weitere beispielhafte Konfiguration, bei der zwei Endpunkte eine über NAT und TURN geführte Verbindung zueinander aufweisen,
- Fig. 4: eine Ausführungsform der erfindungsgemäßen Telekommunikationsanordnung,
- Fig. 5: eine Darstellung von zwei unterschiedlichen Konfigurationen mit verschiedenen physischen Eigenschaften, denen der gleiche logische Aufbau zugrunde liegt, und

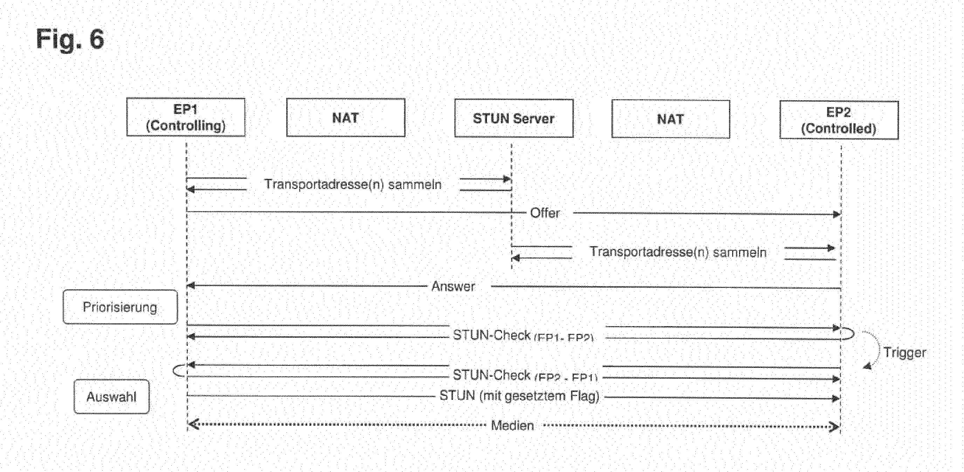

- Fig. 6: ein Ablaufdiagramm für einen erfindungsgemäß modifizierten STUN-Connectivity-Check.

Fig. 4 zeigt eine Ausführungsform einer erfindungsgemäßen IP-Netz-basierten Telekommunikationsanordnung am Beispiel von vielen Terminals TE1.1 - TE1.n (hier beispielhaft in einem ersten Subnetz SN1 befindlich) und TE2.1 - TE2.n (hier beispielhaft in einem zweiten Subnetz SN2 befindlich). Die gezeigten Endpunkte EP1 und EP2 stellen die Endpunkte der betrachteten Verbindung dar (vgl. Fig. 3); sie sind über je einen NAT-Server und einen TURN-Server (hier beispielhaft in einem dritten Subnetz SN3 befindlich) miteinander verbunden. Diese Server sind Teil eines IP-Netzes. Das IP-Netz umfasst des Weiteren Router 32, 33, 34 bzw. R1, R2, R3, ein Gateway 52, eine CAC-Instanz (Call Admission Control) 53 (die beispielsweise als Software als Bestandteil eines VoIP-Switches läuft), einen SBC (Session-Border-Controller) 54, einen Medienserver 56 und eine Software-Verteilungseinrichtung 20, die häufig auch als Deployment Service bezeichnet wird. Es ist zu ergänzen, dass auch andere Gerätetypen als Endpunkte einer Verbindung (gemäß Fig. 1 - Fig. 3) auftreten können, wie z.B. ein Gateway 52 oder ein SBC 54. Das vorliegende Verfahren wird dezentral von allen Endpunkten implementiert.

Symbolisch ist eine CD-ROM als Datenträger 90 als Speichermedium für ein das erfindungsgemäße Verfahren implementierende Computerprogramm 92 dargestellt, das in die Software-Verteilungseinrichtung 20 zur Weiterverteilung an die Endpunkte geladen werden kann. Nachstehend wird für die in Frage kommenden Endpunkte der Sammelbegriff EP1 - EPn ohne weitere Spezifizierung verwendet.

Der Begriff "Terminal" umfasst physische Vorrichtungen, also sowohl Hardware-Geräte - wie z.B. (Video-)Telefone - als auch Software-Applikationen, die die Funktionalitäten dieser Hardware-Geräte abbilden, wie z.B. Telefon-Clients oder auch WebRTC-basierte Implementierungen der verschiedenen Web-Browser.

In Fig. 3 sind außerdem bei den verschiedenen Einheiten die jeweiligen zugeordneten Adressen angegeben, nämlich die Host-Adressen HA1,2 bei den Endpunkten EP1 bzw. EP2, die Server-reflexiven Adressen SA1,2 bei den NAT-Servern, die TURN-Server-Adresse TA auf der dem Endpunkt EP1 zugewandten Seite des TURN-Servers TURN sowie die Relayed Adresse RA auf der dem Endpunkt EP2 zugewandten Seite des TURN-Servers TURN.

Fig. 1 und 2 zeigen zwei weitere Beispiele der Verbindungsmöglichkeiten der beiden Endpunkte EP 1 und EP2, nämlich gem. Fig. 1 direkt und gem. Fig. 2 unter Zwischenschaltung je eines NAT-Servers NAT, jeweils mit den entsprechenden Adressen.

Aktuelle Quality of Service (QoS)-relevante Daten sollen bei den STUN-Connectivity-Checks mit einfließen, um die o.g. Priorisierung ggf. zu beeinflussen und damit letztlich die Verbindung auszuwählen, die einen angemessenen QoS-Level bzw. Dienstgüte-Wert bieten kann.

Hierzu werden in den Endpunkten EP1 - EPn Statistiken geführt, die zur Vorhersage des zu erwartenden QoS-Levels auf einer bestimmten Verbindung genutzt werden.
Die betrachteten "QoS-Kriterien" sind beispielsweise:
[1] Paketverzögerung (end-to-end delay) zwischen den beiden Endpunkten EP1 - EPn.
[2] Paketverzögerungsvarianz (jitter)
[3] Paketverlustrate (packet-loss)
[4] Wahrscheinlichkeit für Paketvertauschungen (packet reordering)

Da die Statistikwerte für Prognosen verwendet werden sollen, reicht es nicht einfach, diese Werte zu notieren, sondern es müssen die o.g. Werte pro Verbindungspartner bzw. -partnergruppe abgelegt werden, wobei ggf. auch der gewählte Verbindungsweg (d.h. welches NAT und ggf. welcher TURN-Server wurde genutzt) zu berücksichtigen ist.

### Organisation der Statistikdaten

Es ist üblich, während jeder Verbindung Daten zur RTP (Real Time Protocol)-Verbindungsqualität einzusammeln und z.B. per RTCP (Real Time Control Protocol) dem Kommunikationspartner mitzuteilen. Diese Daten werden aber bisher normalerweise nur zur Beobachtung einer laufenden Verbindung oder am Ende einer Verbindung zur rückblickenden Qualitätsbeurteilung herangezogen.

Gemäß einer Ausführungsform speichert sich jeder Endpunkt EP1 - EPn diese Daten und verknüpft sie mit dem Ziel und ggf. dem Weg (via NAT und/oder TURN), um dann vor einem neuen Verbindungsaufbau zu dem Ziel und ggf. über diesen Weg auf diese Daten zugreifen zu können. Dies geschieht folgendermaßen: In den Daten der ICE-Kandidaten sind die in den Fig. 1 bis 4 gezeigten Daten enthalten. Es sind also bekannt:
- die Host-Adressen ("BASE") beider Partner
- die Server-reffexive(n) Adresse(n) (abhängig davon, ob sich nur einer oder beide Endpunkte hinter NAT befinden)
- die TURN-Server- und die TURN-Relayed-Adresse (falls TURN involviert ist).

Aus diesen Werten werden Adress- und Wegegruppen gebildet, für die gemeinsame QoS-Kriterien gelten.

Es ist nicht immer zielführend, Statistikdaten für jeden kontaktierten Partner-Endpunkt EP1 - EPn (von denen lediglich die Host-Adressen HA1 und HA2 der Endpunkte EP1 bzw. EP2 dargestellt sind) zu führen, da die dafür anfallenden Datenmengen ziemlich groß werden können. Daher kann versucht werden, hier Gruppen von Endpunkten zu definieren, für die die gleichen Vorhersagen gelten können. Die Daten müssen dann nur gruppenweise geführt werden. Hier bietet es sich an, ein IP-Subnetz als eine solche Gruppe zu definieren, da die Wege durch ein Netz in den Routern in der Regel auf Subnetzebene definiert sind. Die bisher üblicherweise übermittelten Host-Adressen enthalten jedoch keinen Hinweis auf das Subnetz. Hier ist eine Erweiterung um den Network-Suffix (z.B. "/24", IPv4 oder IPv6) oder die Subnetz-Maske (z.B. "255.255.255.0", nur IPv4) ratsam, um dieses Problem umfassend zu lösen.

Anders verhält es sich bei den NAT-Geräten (Server-reflexive Adresse) und den TURN-Servern (TURN-Server- und Relay-Adresse). Diese Geräte treten in verhältnismäßig geringen Stückzahlen auf und müssen einzeln betrachtet werden.

Abhängig vom Verbindungsszenario (vgl. Fig. 1 bis Fig. 3) ergeben sich damit folgende Endpunkt/Wege-Gruppen mit gemeinsamen QoS-Daten:
1. Subnetz des Partner-Endpunkts EP1 - EPn (gemäß Fig. 1)
2. Subnetz des Partner-Endpunkts EP1 - EPn + Server-reflexive IP-Adresse (gemäß Fig. 2)
3. Subnetz des Partner-Endpunkts EP1 - EPn + TURN-Server-Adresse/Relayed Adresse (gemäß Fig. 3)

### Der Verfahrensablauf

Immer dann, wenn eine neue Liste mit ICE-Kandidaten (die "Checkliste") aufgebaut wurde, die zunächst nach den bekannten Prioritäten sortiert ist, wird diese in drei Unterlisten geteilt:
Eine Unterliste für die Kandidaten mit direkter Verbindung (gemäß Fig. 1)
Eine Unterliste für die Kandidaten mit Verbindung via NAT (gemäß Fig. 2)
Eine Unterliste für die Kandidaten mit Verbindung via TURN (gemäß Fig. 3)

Für jeden Kandidaten wird nachgeschaut, ob für dieses Ziel (und ggf. den Weg) bereits Statistikdaten vorliegen. Da im Endpunkt EP1 - EPn auch bekannt ist, was für eine Verbindung aufgebaut werden soll (UDP (User Datagram Protocol), TCP (Transmission Control Protocol), Voice, Video, welcher Codec, ...) sind auch die QoS-mäßigen Anforderungen an eine solche Verbindung bekannt.
- Sofern die QoS-Vorhersage eines Kandidaten ergibt, dass der geforderte Dienst über diesen Weg nicht (sinnvoll) zu erbringen ist, wird dieser Kandidat ganz ans Ende der Checkliste gestellt.
- Falls die QoS-Vorhersage eines Kandidaten nur eine geringfügige Minderung der Qualität ergibt, würde dieser Kandidat an das Ende seiner Unterliste (s.o.) verschoben.
- Falls die QoS-Vorhersage eines Kandidaten keine Minderung erwarten lässt oder keine QoS-Daten vorliegen, bleibt die Reihenfolge unverändert.

Da all diese Vorgänge innerhalb des Endpunkts EP1 - EPn - ohne Kommunikation nach außen - funktionieren, ist die Arbeit in Bruchteilen von Sekunden erledigt und beeinträchtigt die Aufbauzeit nur marginal.

Jetzt beginnen die eigentlichen STUN-Connectivity-Checks gemäß der neugeordneten Checkliste, wobei im Standard beschriebene Optimierungsmethoden (dort unter dem Stichwort "Foundations" genannt) auch hier zum Einsatz kommen können. Da diese Optimierungsmethoden jedoch nicht den Kern der Erfindung betreffen, ist eine detaillierte Erläuterung nicht erforderlich.

Da mit den Verbindungskandidaten begonnen wird, die innerhalb der jeweiligen Unterliste die besten QoS-Eigenschaften erwarten lassen oder deren QoS-Vorhersage mangels Daten nicht möglich ist, besteht die berechtigte Erwartung, dass mit möglichst wenig Versuchen die günstigste Verbindung gefunden wird.

Falls (z.B. initial noch) keine Statistikdaten vorliegen, wird die im Standard beschriebene Priorisierung unverändert eingesetzt; mit jeder Verbindung lernt der Endpunkt EP1 - EPn aber dazu und kann die Priorisierung optimieren. Es bleibt anzumerken, dass die Statistikdaten nur für eine bestimmte Zeit für Vorhersagen einsetzbar sind. Daher sollten sie nach einer zu definierenden Zeit (Timeout, beispielsweise. 30 Sekunden bis max. wenige Minuten) automatisch gelöscht werden, falls längere Zeit keine weitere Verbindung zum selben Ziel bzw. über denselben Weg aufgebaut wurde und die Daten hierdurch verifiziert und ggf. aktualisiert werden konnten.

### Ausführungsbeispiele

In ICE sind die Rollen unsymmetrisch verteilt; es gibt einen "Controlling" (steuernden) und einen "Controlled" (gesteuerten) Endpoint bzw. Endpunkt. Wie diese Rollen zugeteilt werden, ist im Standard beschrieben und hier zunächst ohne Belang. Wichtig ist aber die Kenntnis dieser Rollen für das weitere Verständnis.

### 1. Der steuernde Endpunkt wird wie bisher durch ICE bestimmt.

Die erfindungsgemäße Kandidatenpriorisierung und -auswahl sind bei dem nachstehenden Beispiel gem. Fig. 6 interne Abläufe in Endpunkt EP1. In Endpunkt EP2 wird vereinfachend nur der Trigger für den Check in Gegenrichtung dargestellt. Die beiden gezeigten STUN-Checks stehen hier stellvertretend für eine möglicherweise lange Reihe von STUN-Checks (für jeden der z.B. 40 ICE Address-Kandidaten).

Der steuernde Endpunkt EP1 führt somit die o.g. Aktionen durch. Der gesteuerte Endpunkt EP2 bleibt passiv, bis der erste Connectivity-Check zu ihm durchkommt. Er beantwortet ihn umgehend und veranlasst seinerseits umgehend einen Connectivity-Check in die Gegenrichtung ("Triggered Check" gemäß Standard), wobei der bereits einseitig als funktionierend erkannte Kandidat verwendet wird.

Ist dieser Check auch in der Gegenrichtung erfolgreich, so wird dieser Kandidat als Verbindung ausgewählt, was der steuernde dem gesteuerten Endpunkt wiederum mit einer STUN-Meldung mitteilt (in der gemäß Standard ein bestimmtes Flag gesetzt wird). Danach kann der Medienstrom fließen:
Abgesehen von der erfindungsgemäß geänderten Prioritätenfolge und der bereits beschriebenen Übermittlung der Subnetz-Kennung (Suffix oder Maske) entspricht der oben gezeigte Ablauf somit dem Standard.

Es ist darauf hinzuweisen, dass die beiden in Fig. 6 gezeigten STUN-Checks hier stellvertretend für eine möglicherweise lange Reihe von STUN-Checks stehen (somit z.B. bei n = 40 für jeden der 40 ICE-Address-Kandidaten).

### 2. Der steuernde Endpunkt wird (wenn möglich) auf zentrale Punkte gelegt.

Abweichend von der jetzt im Standard beschriebenen Rollenvergabe wird der steuernde Endpunkt EP1 - EPn bevorzugt auf zentrale Punkte (Gateway, Session Border Controller, Medien-Server) gelegt, sofern einer am aktuellen Verbindungsaufbau beteiligt ist. Da hier mit einem größeren Verkehrsaufkommen zu rechnen ist, ist die Wahrscheinlichkeit größer, dass hier passende QoS-Daten vorliegen. Dies ist beispielsweise für zentrale Konferenzen sinnvoll.

### 3. Die bekannten QoS-Daten eines Kandidaten werden im Rahmen der Connectivity-Checks ausgetauscht.

Damit verfügen beide Seiten über dasselbe QoS-Wissen und ergänzen so ihre QoS-Statistik mit dem Wissen des Partner-Endpunkts. Hierdurch lassen sich genauere Prognosen erstellen. Hierfür wäre allerdings eine Erweiterung des STUN-Protokolls erforderlich.

### 4. Die Connectivity-Check-Ergebnisse werden in der QoS-Statistik berücksichtigt.

Nicht nur die Daten von vorherigen oder gerade laufenden Verbindungen werden in der QoS-Statistik berücksichtigt, sondern auch die Ergebnisse der Connectivity-Checks. Ein fehlerhafter Check würde zur Zurückstufung der QoS-Prognose führen. Auf diese Art könnte man Antwort-Wartezeiten bei nachfolgenden Checks vermeiden (in der Regel wird ein fehlerhafter Connectivity-Check ja dadurch erkannt, dass innerhalb eines Timeouts keine Antwort empfangen wurde). Diese Zurückstufung sollte aber zunächst nur für eine IP-Adresse und nicht das ganze Subnetz gelten, da das Ausbleiben der Antwort ja auch durch einen Defekt im Partner-Endpunkt verursacht worden sein kann. Falls jedoch in kürzester (zu definierender) Zeit (typischerweise ca. 30 Sekunden) die Connectivity-Checks mehrerer Partner-Endpunkte im selben Subnetz fehlschlagen, bietet es sich an, die QoS-Prognose für das gesamte Subnetz zurückzustufen.

Erfindungsgemäß beeinflussen einerseits QoS-Statistiken aus der Vergangenheit die Reihenfolge der STUN-Connectivity-Check-Abarbeitung (ICE Kandidatenpaare) und verkürzen damit die Zeitdauer des Verbindungsaufbaus. Andererseits werden QoS-Informationen in den STUN-Connectivity-Check-Nachrichten selbst berücksichtigt. Im Falle von STUN-Request- und STUN-Antwortnachrichten mit QoS-Inhalten (z.B. in Anlehnung an RTCP QoS-Nachrichteninhalte), wird erfindungsgemäß von "STUN-QoS-Checks" gesprochen.

Das nachfolgende Beispiel soll erläutern, weshalb Optimierungen für ICE wichtig sind: Für einen ICE-Voice-Endpunkt A, mit IPv4 und IPv6 für Host, Server-reflexive und TURN-Relay-Adressen, ergeben sich bereits 6 mögliche Empfangstransportadressen (IP/Port) für Voice-(S)RTP-Payload. Das gleiche gilt für den ICE-Endpunkt B, womit sich in dem Beispiel bereits 36 zu tätigende STUN-Connectivity-Checks ergeben. Handelt es sich um einen Video-fähigen ICE-Endpunkt, verdoppelt sich die Anzahl. Gleiches gilt für Screen-Sharing (falls dies auf RTC Video basiert, wie es beispielsweise bei modernen Kommunikationsplattformen der Fall ist).

Es ist festzuhalten, dass die unter Bezug auf die dargestellten Ausführungsformen beschriebenen Merkmale der Erfindung, wie beispielsweise die Art und Ausgestaltung der einzelnen Netzwerkelemente und Schritte zur Ausführung des Verfahrens, insbesondere zum Ermitteln, Speichern und Verteilen bzw. Nutzen der Dienstgüte-Werte, auch bei anderen Ausführungsformen vorhanden sein können, außer wenn es anders angegeben ist oder sich aus technischen Gründen von selbst verbietet. Von derartigen, in Kombination beschriebenen, Merkmalen einzelner Ausführungsformen müssen außerdem nicht notwendigerweise immer alle Merkmale in einer betreffenden Ausführungsform realisiert sein.

### Bezugszeichenliste

- 20 =: Software-Verteilungseinrichtung/Deployment Service (DS)
- 32 =: Router 1
- 33 =: Router 2
- 34 =: Router 3
- 35 =: TURN-Server (S)
- 52 =: Gateway (GW)
- 53 =: Zentrale Instanz/Call Admission Control (CAC)
- 54 =: Session-Border-Controller (SBC)
- 56 =: Medienserver (MS)
- 90 =: Datenträger
- 92 =: Computerprogramm (Prog)
- EP1,2...n =: Endpunkt 1,2...n bezogen auf das beschriebene Verfahren
- TE1.1 ... TE1.n =: Terminals (HW-Geräte oder SW-Clients) im Subnetz 1
- TE2.1 ... TE2.n =: Terminals (HW-Geräte oder SW-Clients) im Subnetz 2
- NAT =: NAT-Server
- HA1,2 =: Host-Adresse 1,2
- RA =: Relayed Adresse
- R1,2 =: Router 1,2
- SA1,2 =: Server-reflexive Adresse 1,2
- SN1,2,3 =: Subnetz 1,2,3
- TA =: TURN-Server-Adresse

## Patentansprüche

1. Verfahren zum Herstellen einer Realtime-Communication-, RTC-, Verbindung zwischen einem ersten Endpunkt (EP1) und einem zweiten Endpunkt (EP2) in einem Internet Protocol, IP-, Netz unter Verwendung einer Interactive Connectivity Establishment for Session Traversal Utilities for Network Adress Translator, ICE-STUN-, Connectivity-Check-Prozedur, umfassend folgende durch den ersten Endpunkt (EP1) ausgeführte Schritte:
- Erstellen einer Liste von möglichen Verbindungswegen zwischen dem ersten Endpunkt (EP1) und dem zweiten Endpunkt (EP2),
- Festlegen einer jeweiligen Priorität für jeden auf der Liste befindlichen möglichen Verbindungsweg und
- Herstellen der RTC-Verbindung zwischen dem ersten Endpunkt (EP1) und dem zweiten Endpunkt (EP2), indem
-- zunächst versucht wird, die RTC-Verbindung unter Verwendung des prioritätsbesten Verbindungswegs herzustellen,
-- und falls dies nicht möglich ist, danach so lange versucht wird, die RTC-Verbindung unter Verwendung des Verbindungswegs mit der jeweils nächstbesten Priorität herzustellen, bis die RTC-Verbindung tatsächlich hergestellt ist,
wobei für jeden möglichen Verbindungsweg dessen jeweiliger Dienstgüte-Wert ermittelt und bei der Festlegung von dessen Priorität auf der Liste berücksichtigt wird; und
wobei für die Verbindungswege in der Liste der möglichen Verbindungswege zwischen dem ersten Endpunkt (EP1) und dem zweiten Endpunkt (EP2) Dienstgüte-Werte, die nur Netzinfrastrukturelementen wie insbesondere Routern (32, 33, 34) bekannt sind, in STUN-Connectivity-Check-Nachrichten eingefügt werden, um den Endpunkten (EP1, EP2) Informationen mitzuteilen, die sie ansonsten nicht zur Verfügung hätten, und diese Dienstgüte-Werte durch den ersten Endpunkt (EP1) bei dem Festlegen der Prioritäten der Verbindungswege berücksichtigt werden.

2. Verfahren nach Anspruch 1,
**dadurch gekennzeichnet, dass** der erste Endpunkt (EP1) die Dienstgüte-Werte der möglichen Verbindungswege zwischen dem ersten Endpunkt (EP1) und dem zweiten Endpunkt (EP2) unter Verwendung von STUN-Meldungen an andere Endpunkte (EP3, ..., EPn) übermittelt.

3. Verfahren nach Anspruch 1 oder 2,
**dadurch gekennzeichnet, dass** Dienstgüte-Werte bisheriger aufgebauter Verbindungen bei der Festlegung der Prioritäten der möglichen Verbindungswege berücksichtigt werden.

4. Verfahren nach einem der vorhergehenden Ansprüche,
**dadurch gekennzeichnet, dass** Gruppen definiert werden, die jeweils zumindest einen Teil der Endpunkte (EP1; EP2; EP3) mindestens eines jeweiligen Subnetzes (SN1; SN2; SN3) und genau einen Verbindungsweg zu diesem Subnetz umfassen, wobei angenommen wird, dass für einen definierten Verbindungsweg zu den verschiedenen Endpunkten einer Gruppe der gleiche Dienstgüte-Wert gilt, wie er aus vergangenen oder bestehenden Verbindungen bereits ermittelt wurde.

5. Verfahren nach einem der vorhergehenden Ansprüche,
**dadurch gekennzeichnet, dass** ein zentraler Punkt des IP-Netzes, wie insbesondere ein Gateway (52), ein Session Border Controller (54) oder ein Medienserver (56), als erster Endpunkt (EP1) ausgewählt wird, um die Dienstgüte-Werte zum Ausführen der Schritte des Verfahrens zu liefern.

6. Verfahren nach einem der vorhergehenden Ansprüche,
**dadurch gekennzeichnet, dass** die ermittelten Dienstgüte-Werte für die möglichen Verbindungswege in einer zentralen Instanz (53) gespeichert und allen Endpunkten (EP1, EP2, EP3, ..., EPn) zugänglich gemacht werden.

7. Computerprogrammprodukt (92) zur Durchführung des Verfahrens gemäß einem der vorhergehenden Ansprüche.

8. Maschinenlesbarer Datenträger (90) mit darauf gespeichertem Computerprogrammprodukt (92) gemäß Anspruch 7.

9. Telekommunikationsanordnung zum Herstellen einer Realtime-Communication-, RTC-, Verbindung zwischen einem ersten Endpunkt (EP1) und einem zweiten Endpunkt (EP2) in einem Internet Protocol, IP-, Netz unter Verwendung einer Interactive Connectivity Establishment for Session Traversal Utilities for Network Adress Translator, ICE-STUN-, Connectivity-Check-Prozedur, umfassend:
den ersten Endpunkt (EP1),
den zweiten Endpunkt (EP2), und
das IP-Netz, über das der erste Endpunkt (EP1) und der zweite Endpunkt (EP2) über Netzinfrastrukturelementen wie insbesondere Router (32, 33, 34) miteinander verbunden sind,
wobei für die Verbindungswege in der Liste der möglichen Verbindungswege zwischen dem ersten Endpunkt (EP1) und dem zweiten Endpunkt (EP2) Dienstgüte-Werte, die nur den Netzinfrastrukturelementen wie insbesondere den Routern (32, 33, 34) bekannt sind, in STUN-Connectivity-Check-Nachrichten eingefügt werden, um den Endpunkten (EP1, EP2) Informationen mitzuteilen, die sie ansonsten nicht zur Verfügung hätten, und diese Dienstgüte-Werte durch den ersten Endpunkt (EP1) bei dem Festlegen der Prioritäten der Verbindungswege berücksichtigt werden, und
dass der erste Endpunkt (EP1) ausgebildet ist, das Verfahren gemäß einem der Ansprüche 1 bis 6 auszuführen.

## Claims

1. A method for generating a real-time communication (RTC) connection between a first endpoint (EP1) and a second endpoint (EP2) in an internet protocol (IP) network using an interactive connectivity establishment for session traversal utilities for network address translator (ICE STUN) connectivity check procedure, comprising the following steps performed by the first endpoint (EP1):
- generating a list of possible connection paths between the first endpoint (EP1) and the second endpoint (EP2),
- establishing a respective priority for each possible connection path included on the list, and
- generating the RTC connection between the first endpoint (EP1) and the second endpoint (EP2), by
- first attempting to generate the RTC connection using the highest-priority connection path
- and, if this is not possible, then attempting to establish the RTC connection using the connection path with the next highest priority in each case until the RTC connection is actually established,
wherein the quality-of-service value for each possible connection path is determined and is considered in establishing the priority of said connection path on the list; and
wherein for the connection paths on the list of possible connection paths between the first endpoint (EP1) and the second endpoint (EP2), quality-of-service values that are known only to network infrastructure elements, in particular routers (32, 33, 34), are inserted into STUN connectivity check messages, in order to communicate to the endpoints (EP1, EP2) information that would otherwise not have been available to them, and these quality-of-service values are considered by the first endpoint (EP1) in establishing the priorities of the connection paths.

2. The method according to claim 1,
**characterized in that** the first endpoint (EP1) transmits the quality-of-service values for the possible connection paths between the first endpoint (EP1) and the second endpoint (EP2) to other endpoints (EP3, ..., EPn) using STUN messages.

3. The method according to claim 1 or 2,
**characterized in that** quality-of-service values from previously established connections are considered when establishing priorities for possible connection paths.

4. The method according to any one of the preceding claims,
**characterized in that** groups are defined, each of which comprises at least some of the endpoints (EP1; EP2; EP3) of at least one respective subnet (SN1; SN2; SN3) and precisely one connection path to that subnet, wherein it is assumed that for a defined connection path to the various endpoints in a group, the same quality-of-service value as was already determined from previous or existing connections applies.

5. The method according to any one of the preceding claims,
**characterized in that** a central point of the IP network, in particular a gateway (52), a session border controller (54), or a media server (56), is selected as the first endpoint (EP1) to deliver the quality-of-service values for performing the steps of the method.

6. The method according to any one of the preceding claims,
**characterized in that** the determined quality-of-service values for the possible connection paths are stored in a central instance (53) and are made accessible to all endpoints (EP1, EP2, EP3, ..., EPn).

7. A computer program product (92) for implementing the method according to any one of the preceding claims.

8. A computer-readable data carrier (90) on which a computer program product (92) according to claim 7 is stored.

9. A telecommunication arrangement for generating a real-time communication (RTC) connection between a first endpoint (EP1) and a second endpoint (EP2) in an internet protocol (IP) network using an interactive connectivity establishment for session traversal utilities for network address translator (ICE STUN) connectivity check procedure, said telecommunication arrangement comprising:
the first endpoint (EP1),
the second endpoint (EP2), and
the IP network, through which the first endpoint (EP1) and the second endpoint (EP2) are connected to one another via network infrastructure elements, in particular routers (32, 33, 34),
wherein for the connection paths on the list of possible connection paths between the first endpoint (EP1) and the second endpoint (EP2), quality-of-service values that are known only to the network infrastructure elements, in particular the routers (32, 33, 34), are inserted into STUN connectivity check messages, in order to communicate to the endpoints (EP1, EP2) information that would otherwise not have been available to them, and these quality-of-service values are considered by the first endpoint (EP1) in establishing the priorities of the connection paths, and
in that the first endpoint (EP1) is configured to implement the method according to any one of claims 1 to 6.

## Revendications

1. Procédé d'établissement d'une connexion Realtime-Communication, RTC, entre un premier point terminal (EP1) et un deuxième point terminal (EP2) dans un réseau Internet Protocol, IP, en utilisant une procédure Interactive Connectivity Establishment for Session Traversal Utilities for Network Address Translator, ICE-STUN, Connectivity-Check comprenant les étapes suivantes réalisées par le premier point terminal (EP1) :
- établissement d'une liste de modes de connexion possibles entre le premier point terminal (EP1) et le deuxième point terminal (EP2),
- définition d'une priorité respective pour chaque mode de connexion possible figurant sur la liste et
- établissement de la connexion RTC entre le premier point terminal (EP1) et le deuxième point terminal (EP2), par le fait que
- il est d'abord essayé d'établir la connexion RTC en utilisant le mode de connexion ayant la meilleure priorité,
- et si cela n'est pas possible, il est ensuite essayé d'établir la connexion RTC en utilisant le mode de connexion ayant respectivement la prochaine meilleure priorité, jusqu'à ce que le la connexion RTC soit effectivement établie,
dans lequel la valeur de qualité de service respective est déterminée pour chaque mode de connexion possible et est prise en compte lors de la définition de sa priorité sur la liste ; et
dans lequel pour les modes de connexion dans la liste des modes de connexion possibles entre le premier point terminal (EP1) et le deuxième point terminal (EP2), des valeurs de qualité de service, qui sont seulement connues des éléments d'infrastructure du réseau comme en particulier les routeurs (32, 33, 34), sont insérées dans des messages STUN-Connectivity-Check afin de communiquer aux points terminaux (EP1, Ep2) des informations dont ils ne disposeraient pas autrement, et ces valeurs de qualité de service sont prises en compte par le premier point terminal (EP1) lors de la définition des priorités des modes de connexion.

2. Procédé selon la revendication 1,
**caractérisé en ce que** le premier point terminal (EP1) transmet les valeurs de qualité de service des modes de connexion possibles entre le premier point terminal (EP1) et le deuxième point terminal (EP2) en utilisant des messages STUN à d'autres points terminaux (EP3, ..., EPn).

3. Procédé selon la revendication 1 ou 2,
**caractérisé en ce que** des valeurs de qualité de service de connexions établies jusque-là sont prises en compte lors de la définition des priorités des modes de connexion possibles.

4. Procédé selon l'une quelconque des revendications précédentes,
**caractérisé en ce que** des groupes sont définis, qui comprennent respectivement au moins une partie des points terminaux (EP1 ; EP2 ; EP3) d'au moins un sous-réseau (SN1 ; SN2 ; SN3) respectif et exactement un mode de connexion à ce sous-réseau, dans lequel il est supposé que pour un mode de connexion défini aux différents points terminaux d'un groupe, la même valeur de qualité de service s'applique que celle qui a déjà été déterminée à partir des connexion précédentes ou existantes.

5. Procédé selon l'une quelconque des revendications précédentes,
**caractérisé en ce qu'**un point central du réseau IP, comme en particulier une passerelle (52), un Session Border Controller (54) ou un serveur média (56), est sélectionné en tant que premier point terminal (EP1) afin de fournir les valeurs de qualité de service pour l'exécution des étapes du procédé.

6. Procédé selon l'une quelconque des revendications précédentes,
**caractérisé en ce que** les valeurs de qualité de service déterminées pour les modes de connexion possibles sont enregistrées dans une instance centrale (53) et rendues accessibles à tous les points terminaux (EP1, EP2, EP3, ..., EPn).

7. Produit de programme informatique (92) pour la réalisation du procédé selon l'une quelconque des revendications précédentes.

8. Support de données lisible par machine (90) sur lequel est enregistré le produit de programme informatique (92) selon la revendication 7.

9. Système de télécommunication pour l'établissement d'une connexion Realtime-Communication, RTC, entre un premier point terminal (EP1) et un deuxième point terminal (EP2) dans un réseau Internet Protocol, IP, en utilisant une procédure Interactive Connectivity Establishment for Session Traversal Utilities for Network Address Translator, ICE-STUN, Connectivity-Check comprenant :
le premier point terminal (EP1),
le deuxième point terminal (EP2), et
le réseau IP, via lequel le premier point terminal (EP1) et le deuxième point terminal (EP2) sont connectés l'un à l'autre par le biais d'éléments d'infrastructure de réseau comme en particulier des routeurs (32, 33, 34),
dans lequel pour les modes de connexion dans la liste des modes de connexion possibles entre le premier point terminal (EP1) et le deuxième point terminal (EP2), des valeurs de qualité de service, qui sont seulement connues des éléments d'infrastructure du réseau comme en particulier les routeurs (32, 33, 34), sont insérées dans des messages STUN-Connectivity-Check afin de communiquer aux points terminaux (EP1, EP2) des informations dont ils ne disposeraient pas autrement, et ces valeurs de qualité de service sont prises en compte par le premier point terminal (EP1) lors de la définition des priorités des modes de connexion, et
que le premier point terminal (EP1) est réalisé pour exécuter le procédé selon l'une quelconque des revendications 1 à 6.
